# EUROPEAN PATENT APPLICATION

(11) **EP 4 387 005 A1**
(43) Date of publication of application: **19.06.2024**
(21) Application number: 22315328.9
(22) Date of filing: 15.12.2022
(51) Int. Cl.: H01R 13/58, B60L 53/16, H01R 13/585, H02G 15/007, H01R 13/506, H01R 13/52

(54) **CONNECTION SYSTEM WITH CABLE RETAINER**

(71) Applicant: Aptiv Technologies Limited, St. Michael (BB)
(72) Inventor: MALANDAIN, Olivier, 45140 Ormes (FR); RAJU, Ashok, 600 089 Chennai (IN); CHARVET, Sebastien, 28210 Senantes (FR)
(74) Representative: INNOV-GROUP

(57) **Abstract**

A connection system (1) for an electrical cable (1000) extending in a longitudinal direction (X), the connection system (1) having:
- a shell structure (10) arranged for housing the electrical cable (1000), and extending in the longitudinal direction (X),
wherein the shell structure (10) has two half shell portions, having each a mating surface extending in the longitudinal direction (X), and arranged to be clamped with each other in a clamping direction (Z) perpendicular to the longitudinal direction (X),
- a cable retainer (30) arranged for retaining the electrical cable (1000), wherein the cable retainer (30) is a separate module arranged inside the shell structure,
wherein the cable retainer (30) has at least one tooth projecting inwardly and arranged to retain the electrical cable (1000), the tooth being arranged to be perpendicular with the clamping direction (Z).

## Description

### TECHNICAL FIELD

The present disclosure relates to a connection system having a cable retainer for retaining an electrical cable, in particular for charging electrical vehicles. This is of interest in the automotive industry in particular.

### BACKGROUND

When charging an electrical vehicle, a user have to take in hand a charging electric vehicle handle, a charging electric vehicle gun or a charging electric vehicle rifle and to connect it to an electrical socket (e.g. socket installed on a wall or on a dedicated charger).

The document US20030139087A1 discloses a cable assembly.

The drawbacks of connection systems from the prior art are that they are not designed to manage cable diversity, in particular in terms of diameter.of the electrical cables, that may vary (e.g. for different voltages). Further, there is a need for an easier manufacturing, a better global product recyclability, and a better integration and compactness.

### SUMMARY

The present disclosure concerns a connection system for an electrical cable extending in a longitudinal direction,
the connection system having:
   - a shell structure arranged for housing the electrical cable, and extending in the longitudinal direction,
wherein the shell structure has two half shell portions, each having a mating surface extending in the longitudinal direction, and arranged to be clamped with each other in a clamping direction perpendicular to the longitudinal direction,
   - a cable retainer arranged for retaining the electrical cable, wherein the cable retainer is a separate module arranged inside the shell structure,
wherein the cable retainer has at least one tooth projecting inwardly and arranged to retain the electrical cable, the tooth being arranged to be perpendicular with the clamping direction.

This allows to provide a connection system (or a handle) able to be adapted to a wide cable diversity, in particular in terms of diameter of the electrical cables, that may vary (e.g. for different voltages). Further, this allows to ease the manufacturing, in particular due to the modular design of the cable retainer that may be adapted to different diameter of electrical cables, and the subassembly design, and this allows to increase the global product recyclability, to better integrate the connection system and to increase the compactness, in particular in taking into account the natural folding or bending of the electrical cable. In addition, the design of the cable retainer includes integrated features for cable retention and cable exit finishing. Still further, this allows to provide a connection system compatible with screwless handles. That is, this allows to have an improved retention of the electrical cable : indeed, with a screw system alone, the retention of the electrical cable is too high, and with a barb system alone, the retention of the electrical cable is too weak.

Advantageously, the cable retainer further has a guiding sleeve arranged to guide the electrical cable.

This allows to provide a better guiding of the electrical cable, in particular by allowing the electrical cable to follow its natural bending.

Advantageously, the connection system further has at least one fixing means, such as a barb or a screw, arranged to clamp the two half shell portions together.

This allows to provide a fixation between the two half shell portions, and in particular a fixation means compatible with screwless handles.

Advantageously, the shell structure has a cable retainer tighten counter shape arranged to tighten the cable retainer in a closed position.

This allows to provide an additional tightening of the cable retainer in the closed position, that is to say to ensure that the cable retainer is in the closed position when closing the e.g. upper half shell portion on the e.g. lower half shell portion. This allows to finalize and force the closing of the cable retainer (in particular for adjustment of mechanical looseness) and to lock the cable retainer in the closed position.

Advantageously, the cable retainer is movable between a closed position wherein the electrical cable may be retained therein and an open position wherein the electrical cable may be inserted therein.

This allows to provide the cable retainer with two positions in order to facilitate the insertion of the electrical cable in the cable retainer, in particular when the e.g. upper half shell portion is not installed (during manufacturing) and closed over the lower half shell portion. Further, this allows to retain the electrical cable when the cable retainer is in the closed position.

Advantageously, the cable retainer has locking means, such as a hook and a protrusion, arranged to fix or lock the cable retainer in a closed position.

This allows to ensure that the cable retainer is locked in the closed position.

Advantageously, the connection system further has latching means (or retention means), such as a tongue and a groove, arranged to latch the cable retainer on the shell structure.

Preferably, the cable retainer has the tongue and the shell structure has the groove. Alternatively, the cable retainer has the groove and the shell structure has the tongue.

This allows to provide a latching feature to latch (or retain) the cable retainer in the desired position within the shell structure, in particular in the longitudinal direction.

Advantageously, the shell structure has guiding means arranged to guide and locate the cable retainer within the shell structure.

This allows to ensure that the at least one tooth is and stays arranged perpendicular to the clamping direction of the shell structure, and/or that the cable retainer has no parasitic movement during use.

Advantageously, the shell structure has interlocking means, such as a tubular portion and a corresponding rounded portion of the cable retainer, arranged to interlock the cable retainer with the shell structure.

This allows to locate the cable retainer in the shell structure, and in particular to avoid any lateral movement of the cable retainer in the shell structure.

Advantageously, the shell structure has an opening arranged to allow gas or liquid to be evacuated from the shell structure.

This allows to avoid any humidity or any gas to stay in the connection system, and thereby increase the safety and life time.

Advantageously, the cable retainer is a separate module having a modular thickness.

Advantageously, the cable retainer may have different wall thicknesses.

This allows to adapt the cable retainer to the diameter of the electrical cable.

Advantageously, the shell structure extends in the longitudinal direction at least on a side of the cable retainer, and is preferably bent on a side opposite to the cable retainer.

Advantageously, the cable retainer is arranged on a first side opposite to a second side, where the connector is installed.

Advantageously, the cable retainer is arranged on a first side arranged to receive the electrical cable.

This allows to provide a handle which is easy to take in hand by a user.

Advantageously, the connection system further has a connector arranged to be connected internally with the electrical cable and has outside ports.

This allows to have the connection system to be connected to a vehicle charge port.

Advantageously, the cable retainer has two half cable retainer portions.

Advantageously, the two half cable retainer portions are hinged together by a hinged portion.

This allows to ease the installation and the retention of the electrical cable in the cable retainer and/or to ease the installation of the cable retainer in the shell structure.

### BRIEF DESCRIPTION OF THE DRAWINGS

Other features, purposes and advantages of the disclosure will become more explicit by means of reading the detailed statement of the nonrestrictive embodiments made with reference to the accompanying drawings
[fig. 1] illustrates a connection system having two half shell portions according to a first embodiment, in a perspective view, with an electrical cable mounted therein,
[fig. 2] illustrates the connection system with one of the two half shell portions removed, and a cable retainer,
[fig. 3] illustrates a detailed view of the connection system, with the cable retainer,
[fig. 4] illustrates another detailed view of the connection system, with the cable retainer,
[fig. 5] illustrates the cable retainer,
[fig. 6] illustrates a cross-sectional view of the connection system, with the cable retainer and a plurality of teeth for retaining the electrical cable,

### DETAILED DESCRIPTION

The present disclosure relates to a connection system 1 for retaining an electrical cable 1000.

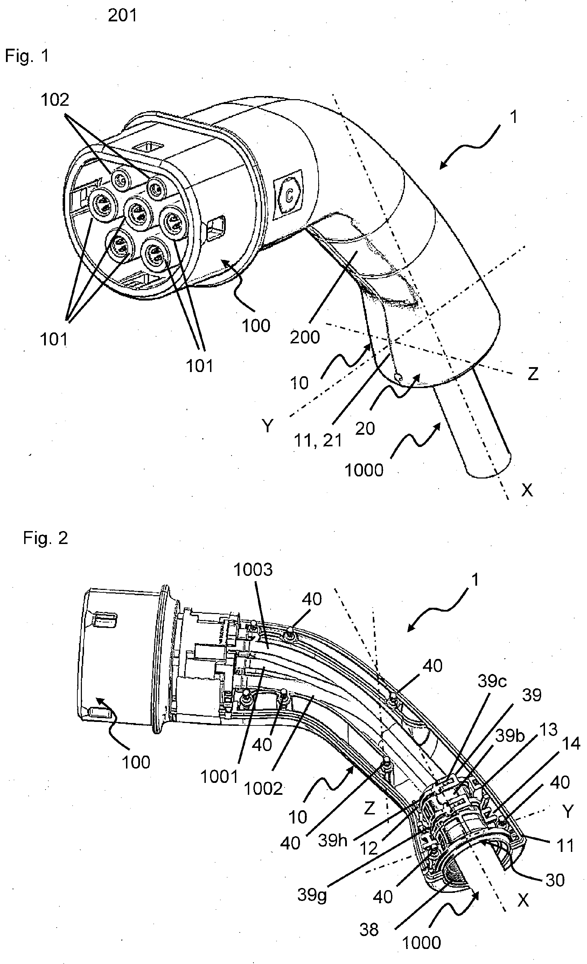

Figure 1 illustrates a connection system 1 having two half shell portions 10, 20 according to a first embodiment, in a perspective view, with the electrical cable 1000 mounted therein.

The electrical cable 1000 extends in a longitudinal direction X, and the shell structure 10, 20, arranged for housing said electrical cable 1000, also extends along the longitudinal direction X, at least partly, at the level of a first side where the electrical cable 1000 goes out from the shell structure 10, 20. The shell structure 10, 20 has two half shell portions 10, 20, each having a (corresponding) mating surface 11, 21 extending in the longitudinal direction X, and arranged to be clamped with each other,in a clamping direction Z perpendicular to the longitudinal direction X.

The shell structure 10, 20 may have a grip portion 200 arranged to be gripped by a user. In other words, the connection system 1 forms, due to the shell structure 10, 20, a handle to be handled by a user, in particular for charging e.g. an electrical vehicle (not shown).

The connection system 1 may further have a connector 100, preferably arranged on a second side, opposite to the first side on which the electrical cable 1000 exits. The connector 100 may have one or more outside ports 101, 102 to be connected to e.g. a charging inlet of an electric vehicle.

Figure 2 illustrates the connection system 1 with one (e.g. 20) of the two half shell portions 10, 20 removed, and a cable retainer 30 of the connection system 1.

The connection system 1 further has a cable retainer 30 arranged for retaining the electrical cable 1000. The cable retainer 30 is arranged on the first side, where the electrical cable 1000 exits.

The cable retainer 30 is a separate module arranged inside the shell structure 10, 20, and is modular, that is to say may be easily exchanged in the shell structure 10, 20 (e.g. during manufacturing) to be adapted to different diameters or types of electrical cable 1000.

The cable retainer 30 further has a guiding sleeve 38 arranged to guide the electrical cable 1000, and to allow for natural bending of the electrical cable 1000 outside of the shell structure 10, 20.

The connection system 1 may further have one or more (at least one) fixing means, such as a barb 40 or a screw, arranged to clamp the two half shell portions 10, 20 together, preferably in the clamping direction Z, perpendicular to the longitudinal direction X.

In the example of figure 2, eight barbs 40 are provided. The barbs 40 allow for an improved clamping of the shell structure 10, 20 cooperating with the cable retainer 30, as will be explained with more details here after.

Further, the mating surface 11 of the (lower) half shell portion 10 is arranged to be in contact with the corresponding mating surface 21 of the (upper) half shell portion 20 (removed for sake of clarity of the drawing). The mating surfaces 11, 21 extend in the longitudinal direction X, at least partially.

The cable retainer 30 is shown in the closed position in figure 2, with the electrical cable 1000 retained therein. The cable retainer 30 may have locking means, such as hooks 39, 39b cooperating with corresponding protrusions 39c, 39d, arranged to fix the cable retainer 30 in the closed position. In this manner, the cable retainer 30 is locked in the closed position.

The shell structure 10, 20 may further have a cable retainer tighten counter shape 12 arranged to tighten the cable retainer 30 in a closed position, that is to say to allow to finalize the closing of the cable retainer 30, or to tighten the cable retainer 30 in the closed position. That is, the cable retainer tighten counter shape 12 may be in contact with a tightening portion 39h of the cable retainer 30 so as to finalize the closing of the cable retainer 30 onto the electrical cable 1000 and/or to allow the cable retainer 30 to be tightened on the electrical cable 1000. In details, the tightening portion 39h of the cable retainer 30 may slide on the cable retainer tighten counter shape 12 and/or on a cable retainer rest counter shape 13 of the shell structure 10, 20. The cable retainer tighten counter shape 12 also ensures the correct orientation of the cable retainer 30 so that the tooth 31 projects in the perpendicular direction compared to the clamping direction Z. The cable retainer rest counter shape 13 of the shell structure 10, 20 allows for resting of the cable retainer 30, and may be of the same shape of the cable retainer tighten counter shape 12.

Either one or both of the lower or upper shell structure 10, 20 may be equipped with the cable retainer tighten counter shape 12 and/or the cable retainer rest counter shape 13.

The shell structure 10, 20 may further have guiding means such as a guiding track 14 arranged to guide and locate the cable retainer 30 within the shell structure 10, 20, in particular by cooperating (sliding) with a guiding portion 39g of the cable retainer 30.

In addition, the connector 100 may be arranged to be connected internally within the shell structure 10, 20 to connect portions 1001, 1002, 1003, etc. of the electrical cable 1000. In other words, the portions 1001, 1002, 1003, etc. of the electrical cable 1000 may be cables or wires formed in the electrical cable 1000 and split in order to be connected one by one to the connector 100 (in particular to corresponding one of the outside ports 101, 102). That is, the connector 100 connects the ends of the portions 1001, 1002, 1003, etc. of the electrical cable (also referred as second end of the electrical cable 1000). The first end of the electrical cable 1000 exits from the shell structure 10, 20 and may be connected to eg. a wall socket or a dedicated charger.

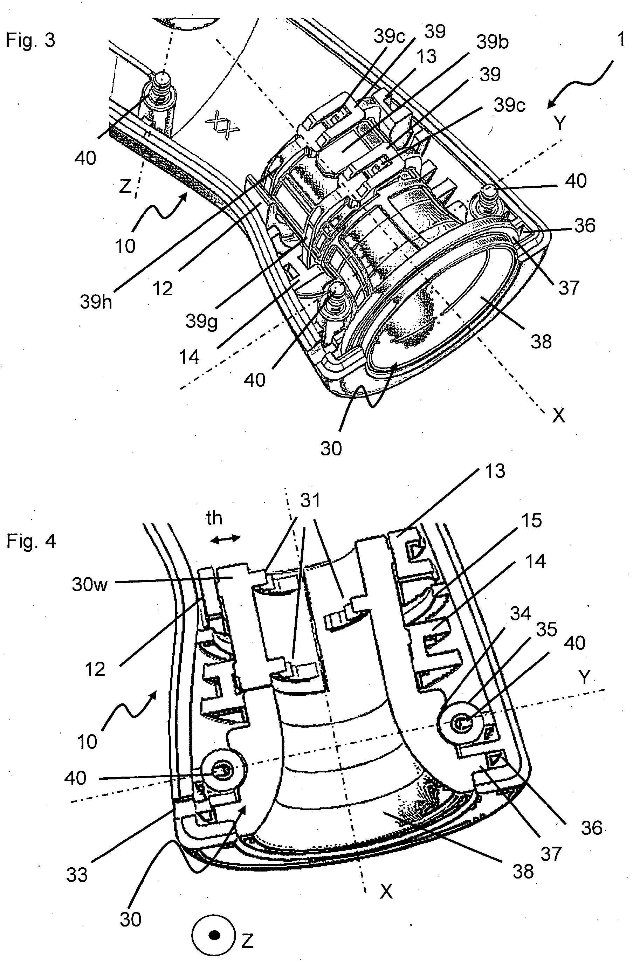

Figure 3 illustrates a detailed view of the connection system 1, with the cable retainer 30. For sake of explanation, the electrical cable 1000 has been removed from the illustration of figure 3.

The shell structure 10, 20 and cable retainer 30 may further have latching means, such as a tongue 37 and a groove 36, arranged to latch the cable retainer 30 on the shell structure 10, 20. As shown in figure 3, the shell structure 10, 20 has the groove 36 and the cable retainer 30 has the tongue 37.

Figure 4 illustrates another detailed view of the connection system 1, with the cable retainer 30. For sake of explanation, the electrical cable 1000 has been removed from the illustration.

The cable retainer 30 has at least one tooth 31 projecting inwardly and arranged to retain the electrical cable 1000 (not shown). The tooth 31 is arranged to be perpendicular with the clamping direction (Z), that is to say preferably in a tooth direction Y. In a preferred embodiment, the tooth direction Y may be a direction linking two barbs 40 on each side of the cable retainer 30.

By cooperating with the barbs 40, this allows to improve the connection system 1 and to better retain the electrical cable 1000.

The shell structure 10, 20 may further have an opening 33 arranged to allow gas or liquid to be evacuated from the shell structure 10, 20.

The cable retainer 30 is shown as the separate module having a modular thickness. That is to say, the cable retainer 30 has a wall 30w. Depending on the electrical cable 1000 to be retained by the cable retainer 30, it is possible to adapt, e.g. during manufacturing, the thickness th of the wall 30w of the cable retainer 30. Thereby, the cable retainer 30 is modular and easily adaptable to various sizes, diameters or types of electrical cable 1000, such as e.g. 10.5 mm, 13.9 mm or 17.1 mm without being limited to such values.

The shell structure 10, 20 may further have interlocking means, such as a tubular portion 35 (e.g. housing the barbs 40) and a corresponding rounded portion 34 of the cable retainer 30, arranged to interlock the cable retainer 30 with the shell structure 10, 20.

The shell structure 10, 20 may further have rigidifying means, such as an inner ridge 15.

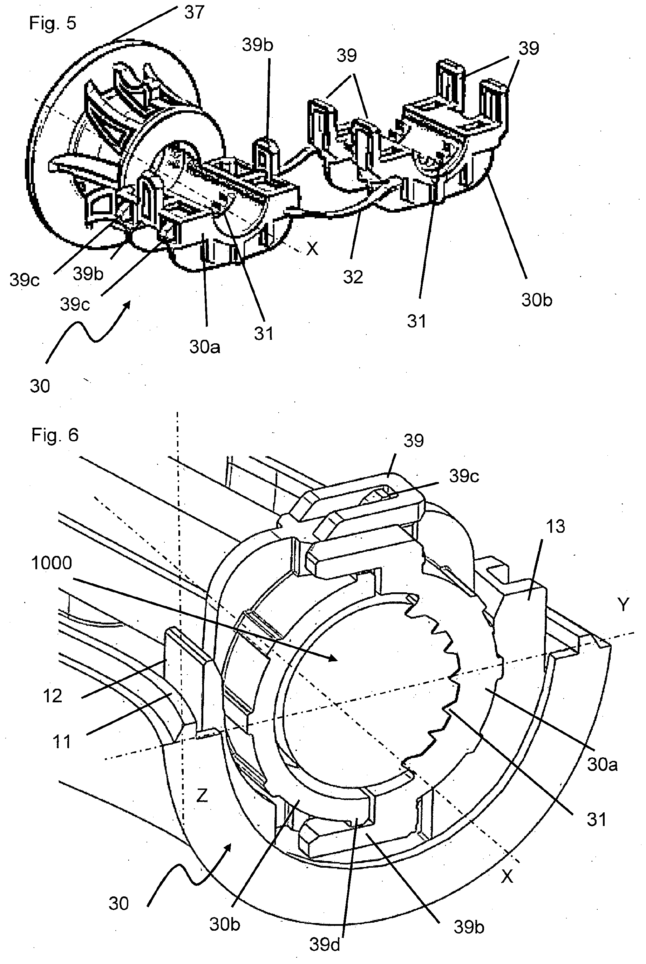

Figure 5 illustrates the cable retainer 30 in an open position, ready to receive the electrical cable 1000 (not shown) therein.

That is, the cable retainer 30 is movable between the closed position wherein the electrical cable 1000 (not shown) may be retained therein and the open position wherein the electrical cable 1000 may be inserted or installed therein.

The cable retainer 30 has two half cable retainer portions 30a, 30b, which may be hinged together by a hinged portion 32 of the cable retainer 30.

The protrusion 39d arranged to cooperate with the hook 39b is hidden in the illustration of figure 5.

Figure 6 illustrates a cross-sectional view of the connection system 1, with the cable retainer 30 and a plurality of teeth 31 for retaining the electrical cable 1000.

The cable retainer tighten counter shape 12 together with the squared shape of the tightening portion 39h allows to ensure the correct orientation (i.e. locating) of the cable retainer 30 so that the tooth 31 projects in perpendicular direction compared to the clamping direction Z. That is, the tooth 31 (or the plurality of teeth 31) projects in the direction Y perpendicular to both the clamping direction Z and the longitudinal direction X (i.e. main direction of the electrical cable 1000 and the cable retainer 30).

The shell structure 10, 20 may be made out of plastic, and the cable retainer 30 in plastic or in elastomer.

It will be understood that various modifications and/or improvements obvious to the person skilled in the art may be made to the various embodiments of the disclosure described in the present description without departing from the scope of the disclosure defined by the appended claims. The different embodiments can be combined whenever possible.

## Claims

1. A connection system (1) for an electrical cable (1000) extending in a longitudinal direction (X), the connection system (1) having:
- a shell structure (10, 20) arranged for housing the electrical cable (1000), and extending in the longitudinal direction (X), wherein the shell structure (10, 20) has two half shell portions (10, 20), each having a mating surface (11, 21) extending in the longitudinal direction (X), and arranged to be clamped with each other in a clamping direction (Z) perpendicular to the longitudinal direction (X),
- a cable retainer (30) arranged for retaining the electrical cable (1000), wherein the cable retainer (30) is a separate module arranged inside the shell structure (10, 20),
wherein the cable retainer (30) has at least one tooth (31) projecting inwardly and arranged to retain the electrical cable (1000), the tooth (31) being arranged to be perpendicular with the clamping direction (Z).

2. The connection system (1) of claim 1, wherein the cable retainer (30) further has a guiding sleeve (38) arranged to guide the electrical cable (1000).

3. The connection system (1) of any one of claims 1 to 2, further having at least one fixing means, such as a barb (40), arranged to clamp the two half shell portions (10, 20) together.

4. The connection system (1) of any one of claims 1 to 3, wherein the shell structure (10, 20) has a cable retainer tighten counter shape (12) arranged to tighten the cable retainer (30) in a closed position.

5. The connection system (1) of any one of claims 1 to 4, wherein the cable retainer (30) is movable between a closed position wherein the electrical cable (1000) may be retained therein and an open position wherein the electrical cable (1000) may be inserted therein.

6. The connection system (1) of any one of claims 1 to 5, wherein the cable retainer (30) has locking means, such as a hook (39, 39b) and a protrusion (39c, 39d), arranged to fix the cable retainer (30) in a closed position.

7. The connection system (1) of any one of claims 1 to 6, further having latching means, such as a tongue (37) and a groove (36), arranged to latch the cable retainer (30) on the shell structure (10, 20).

8. The connection system (1) of any one of claims 1 to 7, wherein the shell structure (10, 20) has guiding means (14) arranged to guide and locate the cable retainer (30) within the shell structure (10, 20).

9. The connection system (1) of any one of claims 1 to 8, wherein the shell structure (10, 20) has interlocking means, such as a tubular portion (35) and a corresponding rounded portion (34) of the cable retainer (30), arranged to interlock the cable retainer (30) with the shell structure (10, 20).

10. The connection system (1) of any one of claims 1 to 9, wherein the shell structure (10, 20) has an opening (33) arranged to allow gas or liquid to be evacuated from the shell structure (10, 20).

11. The connection system (1) of any one of claims 1 to 10, wherein the cable retainer (30) is a separate module having a modular thickness.

12. The connection system (1) of any one of claims 1 to 11, wherein the shell structure (10, 20) extends in the longitudinal direction (X) on a side of the cable retainer (30), and is preferably bent on a side opposite to the cable retainer (30).

13. The connection system (1) of any one of claims 1 to 12, further having a connector (100) arranged to be connected internally with the electrical cable (1000) and having outside ports (101, 102).

14. The connection system (1) of any one of claims 1 to 13, wherein the cable retainer (30) has two half cable retainer portions (30a, 30b).

15. The connection system (1) of claim 14, wherein the two half cable retainer portions (30a, 30b) are hinged together by a hinged portion (32).
